# EUROPEAN PATENT SPECIFICATION

(11) **EP 2 210 499 B1**
(45) Date of publication and mention of the grant of the patent: **08.01.2014**
(21) Application number: 10075150.2
(22) Date of filing: 01.04.2010
(51) Int. Cl.: A23G 1/18, A23G 1/00

(54) **Apparatus for continuous tempering of chocolate mass**
Verfahren und Vorrichtung zur kontinuerlichen Temperierung von Schokoladenmasse
Procédé et dispositif pour le conditionnement thermique continu de masses de chocolat

(43) Date of publication of application: 28.07.2010
(60) Divisional application: 13005600.5
(73) Proprietor: Aasted ApS, 3520 Farum (DK)
(72) Inventor: Holmud, Dennis, 2860 Søborg (DK)
(74) Representative: Heiden, Finn

(56) References cited:
- EP-A1- 0 872 187
- EP-A1- 0 893 066
- EP-A1- 0 947 140
- EP-A1- 1 425 975
- EP-A1- 1 566 104
- EP-A1- 1 616 487
- EP-A2- 1 050 214
- EP-A2- 1 249 174
- WO-A1-01/06863
- WO-A1-92/00015
- DE-A1- 2 602 877
- DE-A1- 10 329 177
- FR-A- 1 163 921

## Description

The present invention concerns an apparatus for continuous tempering of chocolate mass comprising a cooling stage, a crystallisation stage and a conditioning and mixing stage arranged as a tempering column, as well as a pump means for the chocolate mass.

The apparatus may for example have disc-shaped chocolate chambers interconnected via chocolate channels and intermediary disc-shaped water chambers as well as a central shaft connected with stirring tools arranged in the chocolate chambers. However, the apparatus could have several different inner configurations as long as it is able to perform continuous tempering of fat-containing, crystallisable chocolate mass. The chocolate channels could for example be arranged at the periphery of the chocolate chambers or could be arranged as ring-shaped openings through which the shaft extends. When the openings are ring-shaped the stirring tools are typically sheave-formed. An external pump provides a pressure for the flow of chocolate through the chambers of the apparatus.

The apparatus could also be of the configuration where the column comprises ring-shaped water chambers at the periphery, surrounding an inner circular channel for the chocolate mass in which is arranged a rotating screw extending all through the column. The outer periphery of the screw is typically only a few millimetres from the inner surface wall of the surrounding water chambers. The screw is acting as pump means for the transportation of the chocolate through the column.

The apparatus could also be a so-called high shear tempering apparatus, when the column comprises ring-shaped water chambers surrounding an inner circular channel for the chocolate mass in which is arranged a rotating shaft with two or more longitudinally extending knife means. The knives have surfaces that slides over the inner periphery of the chocolate channel during rotation of the shaft.

Generally, the chocolate mass that may be continuously tempered by the apparatus according to the invention encompass all types of suspensions of non-fat particles such as sugar, milk powders and cocoa solids mixed up with a liquid fat constituent, so that the suspensions are capable of crystallizing. When it comes to the most widely used chocolate mass types, the fat constituent comprises genuine cocoa butter typically in a content of up to approximately 35%. However, the fat phase may also comprise substitutes as well. A small content of up to 2-3 % of genuine cocoa butter may still be left in the recipe. Substitutes may be in the form of other types of fat-containing oils such as palm-kernel oil. Chocolate types having the cocoa butter been replaced by other fats are often named commercially as compound chocolate, especially when the cocoa butter has been replaced completely by palm-kernel oil. Mass made of up to 100% cocoa butter may however also be continuously tempered. It is used later on as constituent in the production of different chocolate mass recipes.

However, for the continuous tempering to be performed, it is decisive, that whether the fat phase constitutes of genuine cocoa butter or substitutes, the fat phase must be capable of crystallizing into stable crystal types when the mass solidifies, such as the βV-crystals developing in genuine cocoa butter. Only then, eatable chocolate articles with good taste, crisp break and shiny appearance are created. The solidified chocolate articles will also achieve the longest possible shelf life and the best resistance against bloom, as instable crystals are diminished. If there is a content of in-stable crystals left in the mass, they will give rise to shorter shelf-life as the articles will bloom more quickly as when in-stable crystals are not present.

Optimal is then, when the type of crystals are stable βV-crystals only. The content thereof in the ready tempered chocolate mass shall be at a desired content- for example of 1,0 % for a specific production. Only then the manufacturer can rely on that the quality of his chocolate products are always the same.

Before the chocolate mass is supplied to perform the actual tempering process by running continuously through the tempering apparatus, the mass is heated to around 40-50°C in a premature step. Then essentially all the crystals in the chocolate mass are melted. The premature step is typically arranged distant to the tempering apparatus as the mass is heated in a storage tank. However, a heating step could also be arranged in the tempering apparatus in front of the cooling stage.

By the prior art tempering process the chocolate mass is being cooled to around 29-34°C in the cooling stage, so that crystals are very close to be created. Thereafter the mass passes through the crystallisation stage in which the temperature of the mass is typically lowered to 26-30°C. The mass and the heat-exchanging surfaces of the crystallisation stage is so cold, that crystals are created in the mass. The cooling water temperature is generally set to 10-14°C by the tempering apparatus at the market today. The approximate temperature of the heat-exchanging surfaces of the crystallisation stage is advised to be below 18°C, so that crystal creation ("impfning") is performed at the cooling surfaces and not in the mass. Thereafter, the mass is conditioned and the crystals are mixed out through the mass. By conditioning means that creation and development of new crystals in the mass proceed. The temperature is also raised 0,5-2,0°C in the conditioning and mixing stage. The purpose is to melt out as many as possible of the in-stable crystals, which unavoidably are created at the cold surfaces of the crystallisation stage. Desirable is to preserve a content of stable βV-crystals only, by trying to melt up the in-stable crystals, which melt at lower temperatures than the stable βV-crystals. The stable βV-crystals are preserved in the mass in an amount of typically 0,01% - 5%, preferably in an amount of 0,1%-2%.

Apparatuses for performing the above continuous tempering methods have dominated the market for many years. Though the cold surfaces of the cooling and crystallisation stages have made the machines smaller in their physical size, they are however still large and expensive, especially when bigger amounts of mass shall be continuously tempered, i.e. more than 500kg/hour. The principle with the cold surfaces of the crystallisation stage also creates a huge amount of in-stable crystals, which very often makes it difficult to achieve the desirable, highest possible quality of the moulded product, especially in terms of shelf-life. This is because it is time consuming and energy consuming to remove in-stable crystals entirely during the final conditioning or reheating stage. The tempering columns of the apparatus would simply be to big and expensive if the conditioning stages should have sufficient capacity to achieve total re-melting of in-stable crystals. When mass with high fat content is tempered, then the amount of in-stable crystals created is also high. Then, the problem is even more exaggerated when chocolate with high fat content such as milk chocolate, white chocolate, nougat or filling mass for pralines are tempered.

A given size of a tempering machine at the market has a fixed length and consequently fixed areas for cooling, crystallisation and reheating.

Due to the above described problematic of continuous tempering of masses with a high fat content, it is well-known today, that the maximum capacity measured in kilograms per hour of tempered mass of a given tempering machine of the ones at the market is lowered severely when recipes with a high fat content are tempered. The maximum capacity is achieved when tempering dark chocolate having a fat content between 20-34%. In comparison herewith the capacity is typically lowered around 20% when milk chocolate, compound chocolate, nougat or other mass with a fat content between 30% and 40% is tempered.

When high fat recipes having fat content between 40% and 100% are tempered, the maximum capacity is lowered up to 50%.

A major disadvantage is then a very high energy consumption, firstly for cooling down the total mass and secondly for reheating the mass. Also the energy requirements are high for the chocolate pumps and the gear motors of the tempering machines.

EP 1425975 A1 (Aasted-Mikroverk) discloses an apparatus where a conduit is branched off from the conditioning stage, so that it returns a stream of already crystallised chocolate to the crystallisation stage. In practice it became very difficult to exactly control the degree of crystallisation continuously performed in the crystallisation stage.

EP 1616487 A1 (Sollich) discloses a tempering apparatus, by which already tempered mass is re-circulated to the mixing or conditioning stage, or to the crystallisation stage, for upgrading the concentration of crystals in the mass being tempered.

EP 1249174 A1 (SOLLICH) discloses an apparatus for tempering of chocolate mass comprising a first cooling stage, a second cooling stage and a reheating or mixing stage. In the first and the second cooling stages the chocolate is cooled to 31 to 35°C without crystallisation. The crystallisation takes place in the mixing stage as further mass is added, which has been enriched with chocolate crystals, such as in already crystallised "seed" powder. An example discloses, that mass is retracted from the tempering apparatus at the end of the cooling stage, is being mixed with the chocolate crystal powder and is added to the tempering apparatus at the beginning of the mixing stage. Another example discloses that mass from the supply tank is being mixed with the chocolate crystal powder and is added at the beginning of the mixing stage.

EP 1180941 A1 (Bühler) discloses a method and an apparatus by which a seed suspension having a content of βVI crystals is prepared by use of a high shear crystalliser, with or without the addition of crystal powder. The seed suspension is subsequently mixed in a content of 0,01% - 0,2% with a main stream of a crystal free mass, such as for example a filling mass with a content of oils derived from nuts. The challenge of this prior method and apparatus seems to be, that the mixing has to be very intensive and thoroughly for the resultant mass to be sufficiently homogenous. Also the method is very time consuming as it takes at least 11/2-2 hours for the seed suspension to be created and the equipment is expensive. Furthermore, is the added seed powder very expensive as it is based on cocoa butter fat.

DE 103 29 177 A1 (Dohmann) discloses an apparatus for tempering of chocolate mass having one or more internal by-pass channels extending through water chambers inside the apparatus. Separate streams of mass running through the by-pass channels are mixed with the main stream of mass for improving the general mixing characteristics of the mass being tempered. All streams of mass are subjected to the same temperature conditions dictated by the water chambers, being either cooled or heated. Consequently, all streams are either cooled and crystallized simultaneously or heated simultaneously.

According to the present invention, a primary conduit for chocolate mass flowing from stage (A) to stage (C) is arranged by-passing the stage (B) for creating crystals so that an amount of mass is by-passed outside the exchanger without being crystallised.

Then, an amount of mass is by-passed outside the exchanger without being crystallised, while the remaining stream of the mass is flowing through the crystallisation stage for creating crystals in the mass. Thereafter, the two streams of mass are brought together and mixed in the mixing stage.

The by-passed stream of mass is not cooled more than to the lowest possible temperature without creating crystals. It means, that the temperature of the by-passed stream of mass is approximately 4-5°C higher than by the traditional tempering process, i.e. by which the complete mass is cooled down for crystallisation. Thereby, the cooling amount for creating crystals in the by-passed mass is superfluous. Consequently, the total amount of cooling energy required for tempering the mass is much lower than by the prior tempering apparatuses.

Hereby is provided an apparatus, which is especially energy saving in comparison with the prior art. The total energy requirements for providing continuously tempered chocolate mass of high quality is lowered by at least 40% and up to 70% for the mostly applied chocolate types, such as dark chocolate, milk chocolate, nougat and white chocolate. The total energy consumption has been measured and compared with the total energy consumption for a prior art tempering apparatus tempering the same amount and type of mass.

The total capacity deliverable from the inventive apparatus is also raised severely in comparison with the prior art. The capacity raise for a particular size of tempering column is up to two times for such common chocolate types as dark chocolate, milk chocolate, white chocolate and compound. The capacity could for example be increased from 1000 kg/hour and up to 3000 kg/hour. Hereby is also achieved the benefit, that when applying the method according to the invention, the physical size of a given tempering machine could be reduced with approximately 30% for delivering the same amount of tempered chocolate per hour. This is especially an advantage, when the tempering apparatus comprises a column and has a high capacity, such as over 1000 kg/hour. Then, the height of the tempering column is reduced up to approximately 30%, for example from 4,0 Meters in height and to under 3,0 Meters in height. For tempering machines having a capacity of tempered chocolate of more than 3000 kg/hour the advantage is especially great. These prior art tempering machines are so big that they are very difficult to handle, to transport and to install. Typically, the only practical solution is to transport the machines with the column in horizontal position and then raise it to vertical at the customers factory during installation. With the inventive solution this is not necessary any longer, instead the height and the gravity of weight of the machines are lowered so much that they can be handled in upright position. The weight of the machines are also reduced severely with the inventive solution as the weight is reduced up to 50%. As the demand from the market for tempering apparatus having capacity over 3000 kg/hour is increasing the inventive solution has a great value. Also it is now possible to manufacture, handle and install tempering columns having a capacity over 8-10.000 kg/hour as their size and especially height as well as weight are severely reduced.

A further advantage is, that instable crystals may potentially only be created in the smaller first stream of mass being crystallised. Then, a much lesser amount of instable crystals are created than by the prior art. Consequently, lesser energy is required for re-melting the remaining instable crystals in the mass as compared with the prior art. But also the quality of the final mass is potentially better, as the amount of in-stable crystals are substantially lesser than by the prior art.

The stream of mass passing through the crystallisation stage is effectively cooled and crystallised. Especially advantageous is, when the conduit is adapted to by-pass more than half of the total amount of mass entering the apparatus.

When more than half of the total mass is by-passed, the remaining stream of mass in the crystallisation stage achieves more than the double time period for passing the crystallisation stage. The crystallisation is then much more effective than by the prior art. Especially the time prolonging has a positive effect on the initialisation and development of crystals in the mass. When the crystallised and the by-passed stream of mass are mixed, the crystals are effectively and homogenously spread out in the final stream of mass in the conditioning and mixing stage. Surprisingly, the amount of crystals are sufficient to achieve a very high quality of the ready tempered mass, which has been proved by taking out numerous tempering curves from samples. Test taken with DSC (Differential Scanning Calorimeter) proves that the samples contain βV-crystals only.

The by-passed stream of mass is kept at a constant temperature immediately before mixing. The temperature is so high, that the by-passed mass is kept free from crystals. The temperature must also be low enough for the crystals in the crystallised stream not to be re-melted during mixing therewith. To find the appropriate temperature for the particular mass is done by simple "trial and error" by withdrawing a sample and making a tempering curve. The temperature is typically between 29 and 34°C, typically 30-33 °C, however is dependent of the particular mass. The temperature of the by-passed amount of mass is then 4-7°C higher than the temperature of the amount of mass passing through the crystallisation stage.

When the primary conduit is adapted to by-pass between 65% and 95% of the total amount of mass entering the apparatus, the savings in energy are especially high. Then 5% to 35% of the total amount of mass is crystallised in the crystallisation stage. Consequently, the available time for crystallisation of the mass passing through the crystallisation stage is severely extended. When 95% of mass is by-passed, the crystallisation time available is twenty times as long as by the prior art. When 90% of mass is by-passed, the crystallisation time available is ten times as long as by the prior art. When 75% of mass is by-passed, the available crystallisation time is extended four times, and when 70% is bypassed the crystallisation time is extended more than three times. The consequence is, that the actual crystallisation process is a high quality process, which provides much better conditions for the crystals to be initiated and to develop in numbers than by the prior art. This is due to the severely extended time period that the chocolate has available in the crystallisation stage.

As a further consequence of the prolonged time period available for crystallisation, the temperature of the crystallisation surfaces can be raised to more than 19 °C, i.e. typically 20 °C. Then, the crystal initiation primarily takes place in the mass instead of at cold crystallisation surfaces as by the prior art. The amount of undesirable crystals, which always concomitant develop at cold surfaces, are then diminishing, and the need for re-melting these crystals in the conditioning and mixing stage is avoided. As a consequence, the resultant quality is higher with the inventive apparatus and the energy is not needed any longer for reheating the total mass 0,5-2,0°C as by the prior art.

The inlet of the primary conduit can be connected to the end of the cooling stage as close as possible to the transition between the cooling stage and the crystallisation stage as possible. This means, that in practice, the inlet could be arranged in either of both stages, when its not practically possible to arrange it just in-between the two stages. However, decisive is, that the by-passed chocolate mass is essentially free from crystals.

The outlet of the primary conduit can be connected to the beginning of the conditioning stage as close as possible to the transition between the crystallisation stage and the conditioning and mixing stage. This means, that in practice the inlet could be arranged in each of both stages, when its not practically possible to arrange it just in-between the two stages. However, decisive is, that the by-passed chocolate mass is essentially free from crystals and that the chocolate mass be crystallised is sufficiently crystallised when the mass is mixed together.

The tempering apparatus can be barred for chocolate flow between the cooling stage and the crystallisation stage, and a second conduit for chocolate mass is then arranged adapted for by-passing mass from the cooling stage to the beginning of the crystallisation stage. This building-wise makes it easier to control the amount of mass flowing through the crystallisation stage exactly. The energy savings are especially lowered further when a pump is provided in the secondary conduit and not in the primary conduit for the greater by-passed amount. The smaller amount of mass passing through the crystallisation stage is then pumped with a very low energy consumption as the result.

The second conduit could also be branched off from the primary conduit. This is especially advantageous in the building-wise when the conduits are arranged in a construction, which is mounted outside on the tempering column. Then the construction can be mounted as a complete unit in one piece.

The tempering apparatus can also be barred for chocolate flow between the crystallisation stage and the conditioning stage, so that a third conduit for chocolate mass is arranged adapted for by-passing mass from the end of the crystallisation stage to the conditioning stage. A pump could also be arranged in this third conduit instead of in the second conduit with the same advantages to follow.

The third conduit could also be branched into the primary conduit. This is especially advantageous in building-wise when all the conduits are arranged in a construction, which is mounted outside on the tempering column. Then, the construction can be mounted as a ready unit in one piece.

A first chocolate temperature measurement device can be arranged in the inlet of the primary conduit, and the temperature measurement device is wired to an electronic control device, which is adapted to control the cooling amount in the cooling stage in response to received values of the chocolate temperature. Thereby, the temperature of the particular mass is controlled sharply to the exact temperature, so that the mass is free from crystals in the by-pass, however, is at a temperature so that the crystals in the non-by-passed stream can survive when the two mass streams are mixed together in the conditioning stage.

When a second chocolate temperature measurement device is arranged in the outlet of the third conduit, and the temperature measurement device is wired to an electronic control device, which is adapted to control the cooling amount in the crystallisation stage in response to received values of the chocolate temperature, then the temperature of the crystallised mass is controlled to a exact level.

Generally, the conduits could be arranged in tubes or constructions extending outside the tempering column. However, the conduits could also be arranged inside the tempering column, for example in wall parts of the column or in the shaft for the stirring tools. When the tempering column is of the type where the central shaft is surrounded by ring-shaped openings for the flow of the chocolate, then it is especially advantageous construction-wise to arrange the primary by-pass channel in the shaft. However, decisive is that the primary conduit is adapted to by-pass the crystallisation stage.

The invention is further described by referring to the drawing, in which
figure 1 discloses the apparatus according to the invention, seen from the side,
figure 2 schematically discloses the apparatus of figure 1,
figure 3 schematically discloses an example of the inside of the apparatus,
figure 4 schematically discloses another example of the inside of the apparatus,
figure 5 schematically discloses a further example of the inside of the apparatus,
figure 6 discloses schematically the apparatus according to the invention in another configuration, by which the apparatus can re-circulate excess chocolate mass not being consumed, seen in perspective,
figure 7 schematically discloses an other embodiment of the apparatus of figure 2 by which a pump is arranged in the primary conduit,
figure 8 schematically discloses a further embodiment of the apparatus of figure 2 by which a pump is arranged in another conduit,
figure 9 schematically discloses yet a further embodiment of the apparatus of figure 2,
figure 10 schematically discloses an embodiment by which the by-pass conduit is arranged in the central shaft of the apparatus,
figure 11 schematically discloses another embodiment by which the by-pass conduit is arranged in the central shaft of the apparatus,
figure 12 schematically discloses a further embodiment by which the by-pass conduit is arranged in the central shaft of the apparatus, and
figure 13 schematically discloses yet a further embodiment by which the by-pass conduit is arranged in the central shaft of the apparatus.

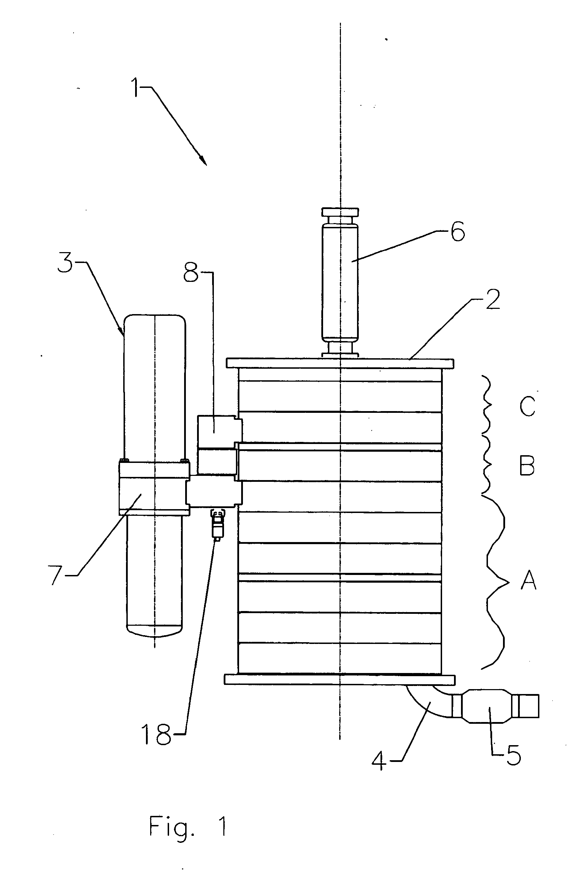

The apparatus 1 disclosed in figure 1 comprises a tempering column 2 for continuous tempering of chocolate mass. Externally on the column 2 is arranged a device 3 for by-passing chocolate outside the column, an inlet 4 and a pump 5 for pumping chocolate mass into the column 2, and an outlet 6 for the ready tempered mass leaving the column. The column 2 is normally arranged in a steel frame or support, which is not disclosed, as it is not part of the invention.

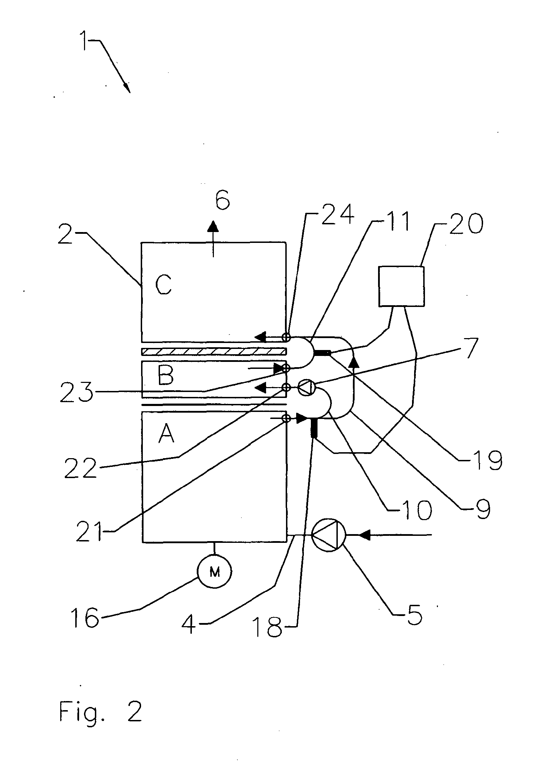

The column 2 comprises a cooling stage A, a crystallisation stage B and a conditioning and mixing stage C. The device 3 comprises a pump 7 as well as a block 8 with internal conduits. In figure 2 is schematically disclosed the tempering column 2 as well as the inner conduits of the block 8 and the pump 7.

In the device 8 is arranged a primary conduit 9 for by-passing the crystallisation stage B. A second conduit 10 is branched of from the primary conduit 9. A pump 7, such as a mono pump is arranged for pumping the mass through the conduit 10 and into the crystallisation stage B. A third conduit 11 extends from the end of the crystallisation stage B and leads the mass therefrom and into the mixing stage C as the conduit 11 branches into the primary conduit 9.

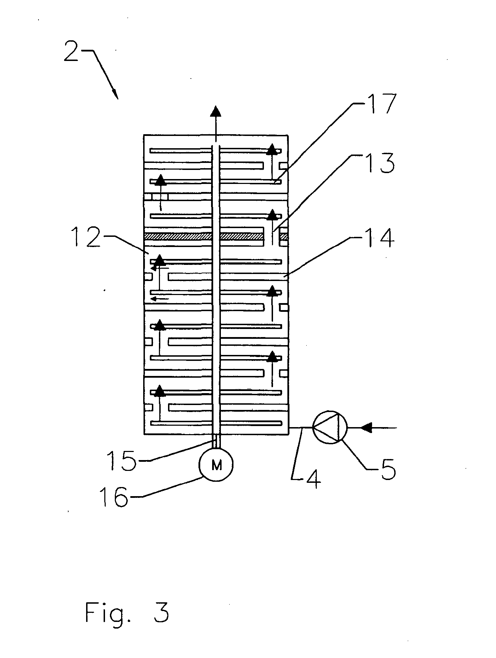

In figure 3 is disclosed, that the apparatus could have disc-shaped chocolate chambers 12 interconnected via chocolate channels 13 and intermediary disc-shaped water chambers 14. A central shaft 15 is connected with stirring tools 17 arranged in the chocolate chambers 12. A motor 16 rotates the shaft 15.

As disclosed at the embodiment of figure 2, the column 2 is barred against flow of mass internally between the cooling stage A and the crystallisation stage B, and between the crystallisation stage B and the mixing stage C. This is simply done by closing of inner channels 13 between the stages A, B, C. Then it is only possible for the mass to flow between the stages A and B, and between the stages B and C by flowing in the conduits 9, 10 and 11.

Temperature sensor 18, 19 for measurement of the mass temperature is arranged and wired to an electronic unit 20, such as a PLC control device. The electronic unit controls the cooling amounts of the non-disclosed water circuits at the cooling stages A and B in response to pre-set temperatures for the sensors. The temperature sensors 18,19 are schematically disclosed in figure 2.

The particular column was taken out of the traditional set-up and equipped in accordance to the present invention with the device 3 comprising the pump 7 and the block 8. Openings 21, 22, 23 and 24 were made in the side of the column 2 into chocolate chambers 12 as schematically disclosed in figure 2. The opening 21 at the end of the cooling stage A is connected with the inlets of conduits 9 and 10. The outlet of conduit 10 is connected with the opening 22 at the beginning of the crystallisation stage B, The opening 23 at the end of the crystallisation stage B is connected with the inlet of the conduit 11. The opening 24 is connected with the outlets of conduits 9 and 11.

The chocolate mass is pumped by the action of the pump 5 from an external non-disclosed source such as a storage tank, in which the chocolate was heated to 40-50°C. In the first stage A of the column 2, the mass is cooled down to a temperature typically between 30°C and 35° depending of the chocolate type. The temperature is pre-set at the sensor 18 and the appropriate cooling amount is regulated in the stage A, so that the pre-set temperature is achieved for the chocolate at the end of the stage A. The highest temperature is for dark chocolate, and the higher the fat-content is, the lower the set temperature is. This means, that the by-passed stream of mass flowing in the conduit 9 has not been cooled more than to the lowest possible temperature without creating crystals. For tests made with a type of dark chocolate the temperature was set to 33-35°C. For tests made with a milk chocolate the temperature was set to 32°C, and for tests made with nougat mass the temperature was set to 30 °C. The temperatures are up to 5°C higher than the temperatures at which the complete mass is crystallised by the prior art apparatus.

At the different tests performed, between 95% and 65% of mass were by-passed in the conduit 9. This means, that between 5% and 35% of mass is pumped via the pump 7 and the conduit 10 into and through the crystallisation stage B. The mass is crystallised in the stage B and leaves through the conduit 11. The desired end temperature is pre-set at the sensor 19 and is typically a few degrees lower than at the sensor 18. As the conduit 11 branches into the conduit 9, in which the major amount of mass is being by-passed, the crystallised mass starts to mix up into the by-passed mass. After having entered into the mixing stage C, the crystals are mixed thoroughly out into the mass.

It means, that the temperature of the by-passed stream of mass is approximately 4-5°C higher than by the traditional tempering process, i.e. by which the complete mass is cooled down for crystallisation. Thereby, the cooling amount for creating crystals in the by-passed mass is superfluous. Consequently, the total amount of cooling energy required for tempering the mass is much lower than by the prior tempering apparatuses.

### Several tests were performed with the inventive apparatus 1.

When tempering dark chocolate of a well-known type such as "Easy-melt" with a fat-content of 32% from Barry Callebaut, a maximum out-put of 1800 kg/hour well-tempered chocolate was achieved. Between 90% and 75% of the mass is by-passed, so that between 10% and 25% of the mass was passing through the crystallisation stage B being crystallised. The maximum output of 1800 kg/hour is to be compared with the maximum achievable maximum output of 1000 kg/hour for a traditional set-up of the same column 2 in a prior art tempering machine of the AMC type from Aasted-Mikroverk. The total energy consumption for the machine was between 7,7 W/Kg/hour well tempered chocolate and 8,71 W/Kg/hour tempered chocolate.

The total energy consumption for a traditional set-up of the particular column tempering the same type of dark chocolate uses between 20 W/Kg/hour tempered chocolate and 25 W/Kg/hour tempered chocolate. The traditional set-up of the column in the AMC uses 20 W/Kg/hour tempered chocolate. Other types of tempering machines at the market uses up to 25 W/Kg/hour tempered chocolate when they are equipped with stirring tools in the form of sheaves.

At another series of tests with a generally uses type of milk chocolate with a fat-content of 36% was performed with the apparatus 1. Between 90% and 67% of the mass was by-passed outside the crystallisation stage B. Then between 10% and 33% was passed through the crystallisation stage B. The maximum output reached was between 1400 kg/hour and 1800 kg/hour well-tempered chocolate. The Energy consumption was between 7,04 W/Kg/hour and 8,23 W/Kg/hour tempered chocolate.

A further series of tests were made with a common type of nougat. The maximum output reached was between 1400 kg/hour and 1600 kg/hour well-tempered nougat. The crystallised stream was 25% and the energy consumptions were between 9,0 and 10,0 W/Kg/hour tempered chocolate.

The results with nougat are especially astonishing, as nougat has always been very difficult to achieve well-tempered without a content of instable crystals. The achieved quality of the nougat made with the inventive apparatus is impressive, which has been proved by taking out numerous tempering curves from samples. Test taken with DSC (Differential Scanning Calorimeter) proves that the samples contain βV-crystals only.

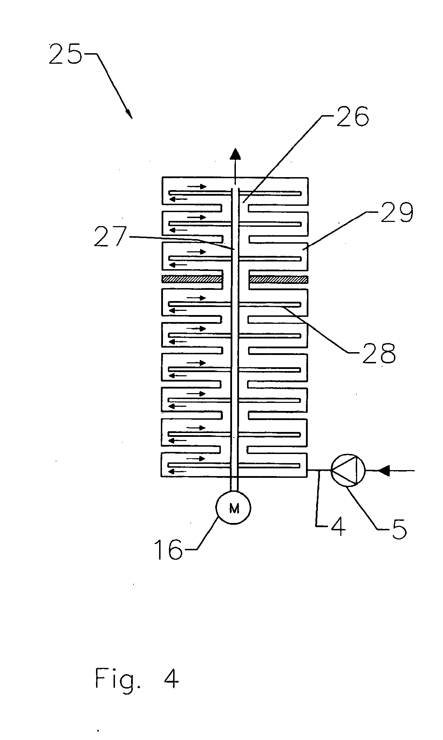

However, the column of apparatus 1 could have several different inner configurations as long as it is able to perform continuous tempering of fat-containing, crystallisable chocolate mass. As disclosed in figure 4 the column 25 the chocolate channels can also be arranged as ring-shaped openings 26, through which a shaft 27 extends. When the openings 26 are ring-shaped the stirring tools 28 are typically sheave-formed so that the chocolate can pass through at a further ring-shaped opening 29 at the periphery. An external pump 5 provides a pressure for the flow of chocolate through the chambers of the apparatus.

The flow-direction of the chocolate is in figures 3 and 4 disclosed from bottom to top. However it could also be from top to bottom of the columns, or it could even be horizontal as long as the by-passing conduit is arranged according to the inventive idea.

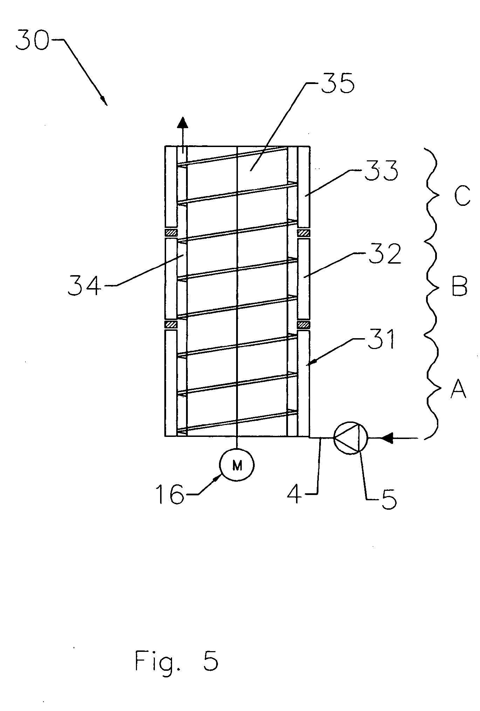

The apparatus could also be of a configuration such as shown in figure 5, by which the column 30 comprises ring-shaped water chambers 31, 32 and 33 at the periphery, surrounding an inner circular channel 34 for the chocolate mass. In the chocolate channel is arranged a rotating screw 35 extending all through the column. The water chamber 31 is then arranged in the cooling stage A, the water chamber 32 is arranged in the crystallisation stage B and the water chamber 33 is arranged in the conditioning and mixing stage C.

The outer periphery of the screw 35 is typically only a few millimetres from the inner surface wall of the surrounding water chambers. The screw is acting as pump means for the transportation of the chocolate through the column 30.

The apparatus could also be a so-called high shear tempering apparatus. The configuration corresponds to that disclosed in figure 5 when the screw is exchanged with a rotating shaft with two or more longitudinally extending knife means. The knives have surfaces, that slides over the inner periphery of the chocolate channel during rotation of the shaft.

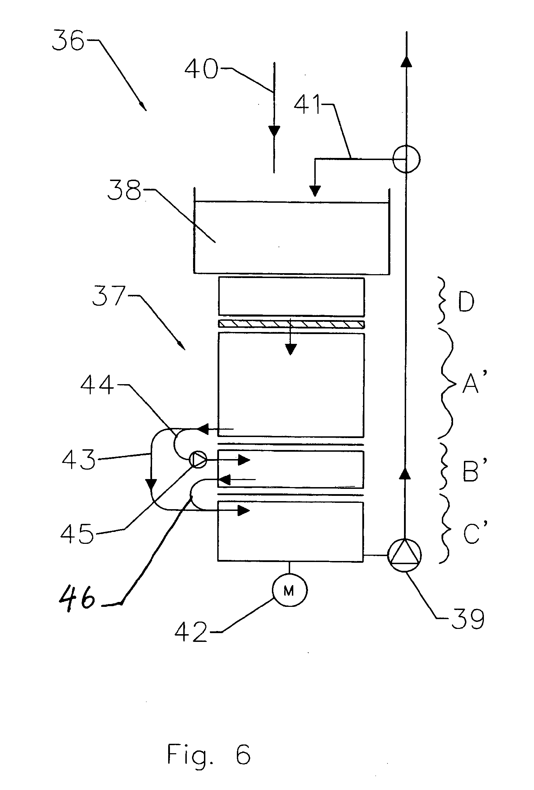

In figure 6 is disclosed another tempering apparatus 36 according to the invention. The apparatus 36 is of the type, which is capable of re-circulating excess chocolate, when not the complete amount of continuously tempered chocolate is consumed. The apparatus comprises a column 37 as well as an open vessel 38 on top of the column 37. The mass is continuously tempered in downwards direction through the cooling stage A', the crystallisation stage B' and the crystallisation stage C'. In front of the cooling stage A' is arranged a de-crystallisation stage D, which heats up the chocolate to 40-50°C, so that it is free from crystals.

The crystallised and ready tempered chocolate leaves the column 37 by pressure from the pump 39. Excess mass is returned from the production via the conduit 40. To much chocolate being produced by the column 37 simply returns directly to the vessel 38 via the conduit 41. A motor 42 turns the shaft with the inner stirring tools, not being disclosed. The major conduit 43 is by-passing the preset amount of mass, typically between 5% and 35% of the total amount of mass. The second conduit 44 comprises a pump 45, which regulates the desired amount to be crystallised in the stage B'. Through the third conduit 46 the crystallised mass flow to be mixed thoroughly with the by-passed mass in the conditioning and mixing stage C'.

The inside of the tempering apparatus disclosed in figure 6 could off course have many different configurations such as the ones disclosed in figures 3, 4 and 5, as long as the primary inventive principle of the by-pass is possible.

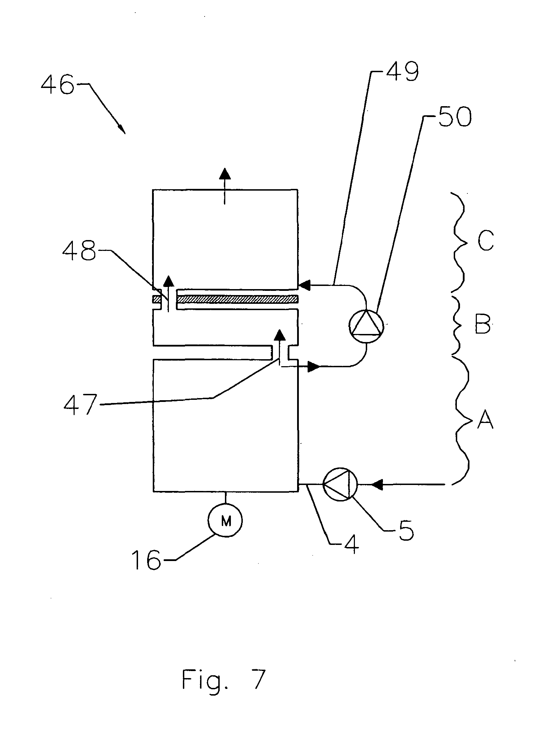

In figure 7 is disclosed a further embodiment of the inventive principle mounted on a typical standard column 46 available in the prior art. An opening 47 is arranged for the chocolate flow from the cooling stage A and to the crystallisation stage B, and an opening is arranged for the chocolate flow from the crystallisation stage B and to the mixing stage C. A conduit 49 is arranged, for example in a tube outside the column. A pump 50 is arranged in the conduit for pumping the by-passed amount of chocolate outside the crystallisation stage B.

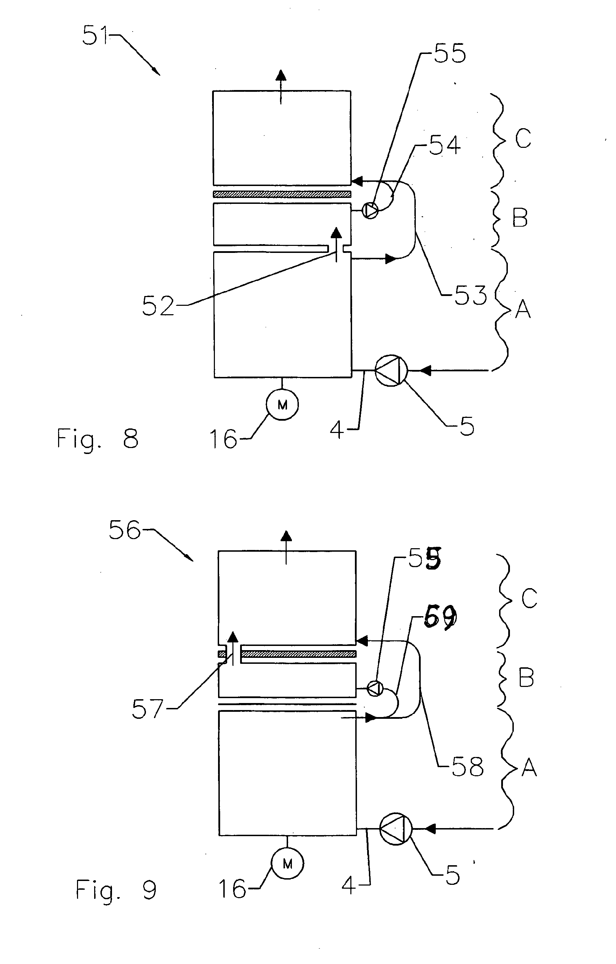

In figure 8 is disclosed another embodiment 51, at which only one chocolate opening 52 is arranged, i.e. for flow of chocolate from the cooling stage A and to the crystallisation stage B. A primary conduit 53 is arranged for by-passing chocolate from the crystallisation stage A and to the mixing stage C. A second conduit 54 and a pump 55 is arranged connecting the end of the crystallisation stage B with the beginning of the mixing stage C. The chocolate is divided at the end of the cooling stage A into a stream that via the general pressure from the pump 5 is by-passed the crystallisation stage B and flow directly to the mixing stage C. A minor part of the chocolate amount in the cooling stage A, such as between 5% and 35% flow through the opening 52 and is crystallised in the stage B, where after it is pumped by the pump 55 through the conduit 54 and into mixing with the remaining mass in the stage C.

In figure 9 is disclosed an embodiment, by which the apparatus 56 is closed between the cooling stage A and the crystallisation stage B. An opening 57 for through flow of chocolate is arranged between the crystallisation stage B and the mixing stage C. A conduit 58 is arranged for by-passing chocolate from the cooling stage A and to the mixing stage C. A pump 55 and a conduit 59 is arranged for pumping the desired amount of chocolate through the crystallisation stage B. Then, a very small amount of energy is applied when for example between 5% and 35% of chocolate mass is crystallised.

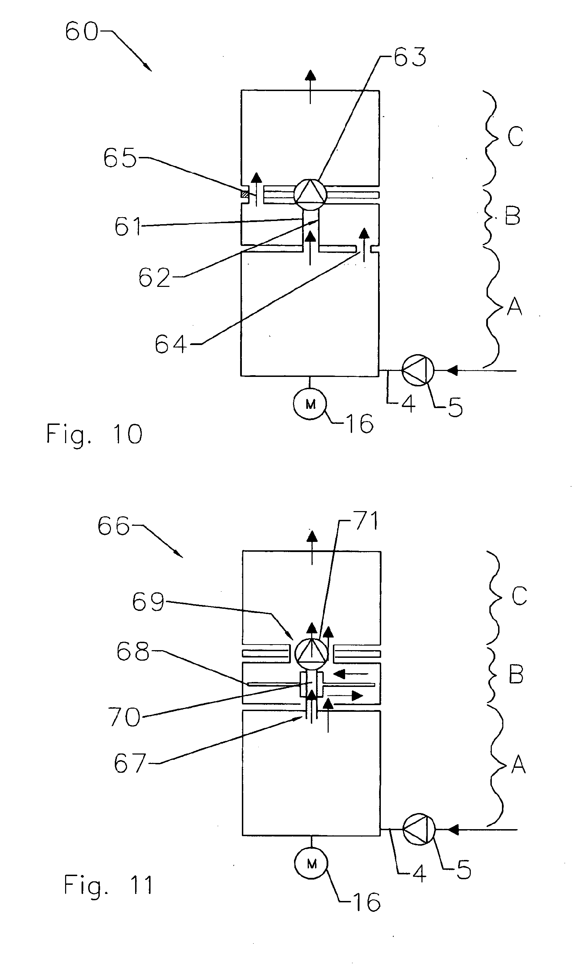

In figures 10, 11, 12 and 13 are disclosed different embodiments, by which the conduits for by-passing chocolate mass are arranged inside the tempering columns. All embodiments comprise a cooling stage A, a crystallisation stage B and a mixing stage C.

In figure 10 the column 60 comprises a hollow shaft 61 with a conduit 62 and a pump 63 for by-passing chocolate mass. The mass enters the column 60 at the inlet 4. The complete mass is cooled in the cooling stage A. A predetermined amount of mass, for example between 95% and 65% is by-passed the crystallisation stage B by being pumped directly to the mixing stage C. The shaft 61 could comprise non-disclosed openings in the side, through which the mass enters into the conduit 62 and via the pump 63 is pumped into the mixing stage C. The remaining mass enters via the opening 64 into the crystallisation stage B. In stage B between 5% and 40% of the mass is crystallised whereafter it flows through the opening 65 and into the mixing stage C where the mixing with the remaining mass is performed. The stirring tools arranged on the shaft could have many different configurations wherefore they are not disclosed. They could for example have the shape of wings or sheaves.

In figure 11 the column 66 is of the type where the shaft 67 comprise stirring tools in the form of sheaves 68. The chocolate then passes on from chocolate chamber to chocolate chamber via ring-shaped openings 69. A conduit 70 and a pump 71 is arranged for pumping the by-passed chocolate mass directly from the cooling stage A, through the conduit 70 arranged in the shaft 67 and to the mixing stage C.

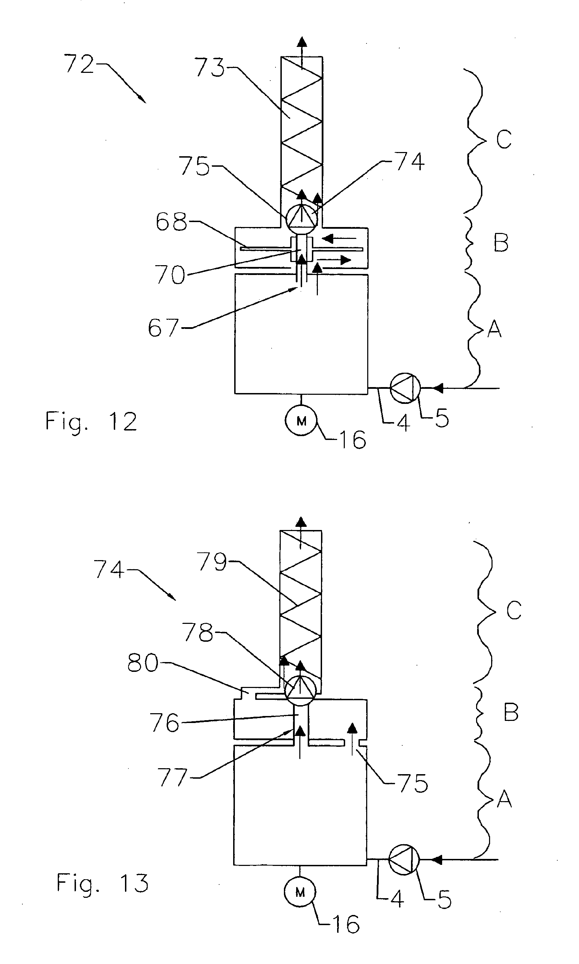

In figure 12 the column 72 comprises the shaft 67 having stirring tools in the form of sheaves 68. The chocolate then passes on from chocolate chamber to chocolate chamber via ring-shaped openings 69. The mixing stage C is however arranged in a separate mixer part 73, which is build on to the crystallisation stage B. The mixer part 73 could be a highly effective static mixer. A pump 74 is arranged for pumping the by-passed amount through a channel 70 in the shaft 67 and directly from the cooling stage A and to the mixer part 73. The remaining amount of mass is crystallised in stage B and flow through the ring-shaped opening 75 into the mixer 73.

In figure 13 is disclosed a variation of the embodiment of figure 12. The column 74 comprises openings 75 for the chocolate arranged at the periphery. Mass is by-passed through the conduit 76 in the shaft 77 and is pumped via the pump 78 into the mixer 79. The amount of mass, that is flowing into the crystallisation stage via the opening 75 leaves the stage B through the opening 80 to the mixer part 79 where the intensive mixing of the two amounts of mass is continuously performed.

## Claims

1. Apparatus (1, 36, 46, 51, 56, 60, 66, 72, 74) for continuous tempering of chocolate mass comprising
a cooling stage (A), a crystallisation stage (B) and a mixing stage (C) arranged as a tempering column (2) as well as pump means (5) for the chocolate mass, **characterised in,**
**that** a primary conduit (8,9,43,49,53,58,62,70,76) for chocolate mass flowing from stage (A) to stage (C) is arranged by-passing the stage (B) for creating crystals so that an amount of mass is by-passed outside the exchanger without being crystallised.

2. Apparatus according to claim 1, **characterised in, that** the primary conduit (8,9,43,49,53,58,62,70,76) arranged by-passing the stage (B) for creating crystals is adapted to by-pass more than half of the total amount of mass entering the apparatus (1, 36, 46, 51, 56, 60, 66, 72, 74).

3. Apparatus according to claim 1, **characterised in, that** the primary conduit (8,9,43,49,53,58,62,70,76) is adapted to by-pass between 65% and 95% of the total amount of mass entering the apparatus (1, 36, 46, 51, 56, 60, 66, 72, 74).

4. Apparatus according to claim 1, **characterised in, that** the inlet (21) of the primary conduit (9) is connected to the end of the cooling stage (A).

5. Apparatus according to claim 1, **characterised in, that** the outlet (24) of the primary conduit (9) is connected to the beginning of the mixing stage (C).

6. Apparatus according to claim 1, **characterised in, that** the tempering apparatus (1, 36, 56) is barred for chocolate flow between the cooling stage (A) and the crystallisation stage (B), and that a second conduit (10,44,59) for chocolate mass is arranged adapted for by-passing mass from the cooling stage (A) to the beginning of the crystallisation stage (B).

7. Apparatus according to claim 1, **characterised in, that** the second conduit (10, 44, 60) branches of from the primary conduit (9, 43, 58).

8. Apparatus according to claim 1, **characterised in, that** the tempering apparatus (1, 36,51) is barred for chocolate flow between the crystallisation stage (B) and the mixing stage (C), and that a third conduit (11,54,for chocolate mass is arranged adapted for by-passing mass from the end of the crystallisation stage (B) to the mixing stage (C).

9. Apparatus according to claim 1, **characterised in, that** the third conduit (11,54) branches into the primary conduit.

10. Apparatus according to claim 1, **characterised in, that** a pump (7,45,55,) is arranged adapted to pump the chocolate flow through the crystallisation stage (B).

11. Apparatus according to claim 1, **characterised in, that** the pump (7,45,55) is arranged in the second conduit (10,44,59).

12. Apparatus according to claim 1, **characterised in, that** the pump (55) is arranged in the third conduit (54).

13. Apparatus according to claim 1, **characterised in, that** a first chocolate temperature measurement device (18) is arranged at the inlet (21) of the primary conduit (9), which temperature measurement device (18) is wired to an electronic control device (20), which is adapted to control the cooling amount in the cooling stage (A) in response to received values of the chocolate temperature.

14. Apparatus according to claim 1, **characterised in, that** a second chocolate temperature measurement device (19) is arranged in the third conduit (11), which temperature measurement device (19) is wired to an electronic control device (20), which is adapted to control the cooling amount in the crystallisation stage (B) in response to received values of the chocolate temperature.

## Patentansprüche

1. Vorrichtung (1, 36, 46, 51, 56, 60, 66, 72, 74) zur kontinuierlichen Temperierung von Schokoladenmasse, aufweisend:
eine Kühlungsstufe (A), eine Kristallisationsstufe (B) und eine Mischungsstufe (C), die als eine Temperierungssäule (2) angeordnet sind, sowie eine Pumpeinrichtung (5) für die Schokoladenmasse, **dadurch gekennzeichnet, dass** eine die Stufe (B) zur Erzeugung von Kristallen umgehende primäre Leitung (8, 9, 43, 49, 53, 58, 62, 70, 76) für von der Stufe (A) zur Stufe (C) fließende Schokoladenmasse angeordnet ist, so dass ein Anteil der Masse außerhalb des Austauschers vorbeigeführt wird, ohne kristallisiert zu werden.

2. Vorrichtung nach Anspruch 1, **dadurch gekennzeichnet, dass** die die Stufe (B) zur Erzeugung von Kristallen umgehend angeordnete primaire Leitung (8, 9, 43, 49, 53, 58, 62, 70, 76) geeignet ist zum Vorbeiführen von mehr als der Hälfte der in die Vorrichtung (1, 36, 46, 51, 56, 60, 66, 72, 74) eintretenden Gesamtmenge der Masse.

3. Vorrichtung nach Anspruch 1, **dadurch gekennzeichnet, dass** die primäre Leitung (8, 9, 43, 49, 53, 58, 62, 70, 76) geeignet ist zum Vorbeiführen zwischen 65 % und 95 % der in die Vorrichtung (1, 36, 46, 51, 56, 60, 66, 72, 74) eintretenden Gesamtmenge der Masse.

4. Vorrichtung nach Anspruch 1, **dadurch gekennzeichnet, dass** ein Einlass (21) der primären Leitung (9) mit einem Ende der Kühlungsstufe (A) verbunden ist.

5. Vorrichtung nach Anspruch 1, **dadurch gekennzeichnet, dass** ein Auslass (24) der primären Leitung (9) mit einem Anfang der Mischungsstufe (C) verbunden ist.

6. Vorrichtung nach Anspruch 1, **dadurch gekennzeichnet, dass** die Temperierungsvorrichtung (1, 36, 56) für Schokoladenfluss zwischen der Kühlungsstufe (A) und der Kristallisationsstufe (B) gesperrt ist und dass eine zweite Leitung (10, 44, 59) für Schokoladenmasse angeordnet ist, die geeignet ist zum Vorbeiführen von Masse von der Kühlungsstufe (A) zu einem Anfang der Kristallisationsstufe (B).

7. Vorrichtung nach Anspruch 1, **dadurch gekennzeichnet, dass** die zweite Leitung (10, 44,60) von der primären Leitung (9, 43, 58) abzweigt.

8. Vorrichtung nach Anspruch 1, **dadurch gekennzeichnet, dass** die Temperierungsvorrichtung (1, 36, 51) für Schokoladenfluss zwischen der Kristallisationsstufe (B) und der Mischungsstufe (C) gesperrt ist und dass eine dritte Leitung (11, 54) für Schokoladenmasse angeordnet ist, die geeignet ist zum Vorbeiführen von Masse zwischen einem Ende der Kristallisationsstufe (B) zur Mischungsstufe (C).

9. Vorrichtung nach Anspruch 1, **dadurch gekennzeichnet, dass** die dritte Leitung (11, 54) in die primäre Leitung abzweigt.

10. Vorrichtung nach Anspruch 1, **dadurch gekennzeichnet, dass** eine Pumpe (7, 45, 55) angeordnet ist, die geeignet ist zum Pumpen des Schokoladenflusses durch die Kristallisationsstufe (B).

11. Vorrichtung nach Anspruch 1, **dadurch gekennzeichnet, dass** die Pumpe (7, 45, 55) in der zweiten Leitung (10, 44, 59) angeordnet ist.

12. Vorrichtung nach Anspruch 1, **dadurch gekennzeichnet, dass** die Pumpe (55) in der dritten Leitung (54) angeordnet ist.

13. Vorrichtung nach Anspruch 1, **dadurch gekennzeichnet, dass** eine erste Schokoladentemperatur-Messeinrichtung (18) am Einlass (21) der primären Leitung (9) angeordnet ist, welche Temparatur-Messeinrichtung (18) mit einer elektronischen Steuereinrichtung (20) verbunden ist, die zum Steuern des Kühlungsgrads in der Kühlungsstufe (A) in Reaktion auf empfangene Werte der Schokoladentemperatur ausgebildet ist.

14. Vorrichtung nach Anspruch 1, **dadurch gekennzeichnet, dass** eine zweite Schokoladentemperatur-Messeinrichtung (19) in der dritten Leitung (11) angeordnet ist, welche Temperatur-Messeinrichtung (19) mit einer elektronischen Steuereinrichtung (20) verbunden ist, die zum Steuern des Kühlungsgrads der Kristallisationsstufe (B) in Reaktion auf empfangene Werte der Schokoladentemperatur ausgebildet ist.

## Revendications

1. Appareil (1, 36, 46, 51, 56, 60, 66, 72, 74) pour le tempérage continu d'une masse de chocolat, qui comprend
un étage de refroidissement (A), un étage de cristallisation (B) et un étage de mélange (C) disposés de sorte à former une colonne de tempérage (2) ainsi que des moyens de pompage (5) pour la masse de chocolat, **caractérisé en ce qu'**un conduit primaire (8, 9, 43, 49, 53, 58, 62, 70, 76) pour la masse de chocolat allant de l'étage (A) vers l'étage (C) est installé afin de contourner l'étage (B) de formation de cristaux de sorte qu'une certaine quantité de masse puisse contourner l'échangeur sans être cristallisée.

2. Appareil selon la revendication 1, **caractérisé en ce que** le conduit primaire (8, 9, 43, 49, 53, 58, 62, 70, 76), installé pour contourner l'étage (B) de formation de cristaux est adapté pour dévier plus de la moitié de la quantité totale de masse qui pénètre dans l'appareil (1, 36, 46, 51, 56, 60, 66, 72, 74).

3. Appareil selon la revendication 1, **caractérisé en ce que** le conduit primaire (8, 9, 43, 49, 53, 58, 62, 70, 76 est adapté pour dévier entre 65 % et 95 % de la quantité de masse totale qui pénètre dans l'appareil (1, 36, 46, 51, 56, 60, 66, 72, 74).

4. Appareil selon la revendication 1, **caractérisé en ce que** l'entrée (21) du conduit primaire (9) est connectée à l'extrémité de l'étage de refroidissement (A).

5. Appareil selon la revendication 1, **caractérisé en ce que** la sortie (24) du conduit primaire (9) est connectée au début de l'étage de mélange (C).

6. Appareil selon la revendication 1, **caractérisé en ce que** l'appareil de conditionnement thermique (1, 36, 56) ne permet pas le flux de chocolat entre l'étage de refroidissement (A) et l'étage de cristallisation (B), et qu'un deuxième conduit (10, 44, 59) destiné à la masse de chocolat est installé de sorte à dévier la masse de l'étage de refroidissement (A) jusqu'au début de l'étage de cristallisation (B).

7. Appareil selon la revendication 1, **caractérisé en ce que** le deuxième conduit (10, 44, 60) bifurque au départ du conduit primaire (9,43, 58).

8. Appareil selon la revendication 1, **caractérisé en ce que** l'appareil de conditionnement thermique (1, 36, 51) ne permet pas le flux de chocolat entre l'étage de cristallisation (B) et l'étage de mélange (C), et qu'un troisième conduit (11, 54) destiné à la masse de chocolat est installé de sorte à dévier la masse de la fin de l'étage de cristallisation (B) jusqu'à l'étage de mélange (C).

9. Appareil selon la revendication 1, **caractérisé en ce que** le troisième conduit (11, 54) bifurque vers le conduit primaire.

10. Appareil selon la revendication 1, **caractérisé en ce que** la pompe (7, 45, 55) est conçue pour pomper le flux de chocolat à travers l'étage de cristallisation (B).

11. Appareil selon la revendication 1, **caractérisé en ce que** la pompe (7, 45, 55) est placée dans le second conduit (10, 44, 59).

12. Appareil selon la revendication 1, **caractérisé en ce que** la pompe (55) est placée dans le troisième conduit (54).

13. Appareil selon la revendication 1, **caractérisé en ce qu'**un premier dispositif de mesure de la température du chocolat (18) est placé au niveau de l'entrée (21) du premier conduit (9), ledit dispositif de mesure de la température (18) étant connecté à un dispositif de commande électrique (20), conçu pour commander l'étendue du refroidissement à l'étage de refroidissement (A) en réponse aux valeurs de température du chocolat reçues.

14. Appareil selon la revendication 1, **caractérisé en ce qu'**un deuxième dispositif de mesure de la température du chocolat (19) est placé au niveau du troisième conduit (11), ledit dispositif de mesure de la température (19) étant connecté à un dispositif de commande électrique (20), conçu pour commander l'étendue du refroidissement à l'étage de cristallisation (A) en réponse aux valeurs de température du chocolat reçues.
